# FASCICULE DE BREVET EUROPEEN

(11) **EP 3 537 007 B1**
(45) Date de publication et mention de la délivrance du brevet: **07.04.2021**
(21) Numéro de dépôt: 19156913.6
(22) Date de dépôt: 13.02.2019
(51) Int. Cl.: F16H 57/04

(54) **TRANSMISSION DE VEHICULE AUTOMOBILE AVEC LUBRIFICATION SELECTIVE DES PIGNONS**
KRAFTFAHRZEUGGETRIEBE MIT SELEKTIVER SCHMIERUNG DER ZAHNRÄDER
MOTOR VEHICLE TRANSMISSION WITH SELECTIVE LUBRICATION OF PINIONS

(30) Priorité: 09.03.2018 FR 1852040
(43) Date de publication de la demande: 11.09.2019
(73) Titulaire: PSA Automobiles SA, 78300 Poissy (FR)
(72) Inventeur: TEIXEIRA, Daniel, 95330 DOMONT (FR); GONCALVES ALVES, Antonio, 78711 MANTES LA VILLE (FR); VACCA, Clement, 75015 PARIS 15 (FR); DION, Thibault, 77144 MONTEVRAIN (FR); TINSEAU, Laurent, 57525 TALANGE (FR)

(56) Documents cités:
- EP-A2- 1 801 461
- JP-A- 2005 069 299
- US-A1- 2011 214 947

## Description

La présente invention concerne une transmission de véhicule automobile comprenant plusieurs rapports de vitesse, et un véhicule automobile comportant ce type de transmission.

Un type de transmission automobile connu comprenant plusieurs rapports de vitesse, comporte un arbre équipé de pignons fixes, et un arbre parallèle équipé de pignons libres en rotation qui engrènent sur ces pignons fixes pour former les rapports.

Un manchon de synchronisation disposé entre deux pignons libres, coulisse axialement pour réaliser de chaque côté successivement une synchronisation de la vitesse par l'application d'une force axiale sur des cônes de frottement, puis un engagement du rapport par un emboîtement de dentures.

On réalise de cette manière des transmissions de véhicules automobiles comme une boîte manuelle pour un moteur thermique, ou une transmission automatique à au moins deux rapports pour une machine électrique de traction de véhicule hybride ou électrique.

Les boîtes de vitesses automatiques des véhicules comportent déjà une pompe à huile nécessaire pour la commande de ce type de transmission, mais qui ne se trouve pas sur les transmissions de machines électriques de traction ou sur les boîtes du type manuel.

Un système de lubrification des pignons connu, présenté notamment par le document US-A1-20110214947, comporte un canal disposé dans le plan d'une couronne dentée d'un différentiel de sortie de la transmission, au-dessus de cette couronne de manière à recevoir les projections d'huile formées par la couronne en rotation suivant une direction tangentielle, qui remontent le canal.

Le canal alimente en partie supérieure plusieurs goulottes transversales disposées chacune au-dessus d'un arbre en rotation comportant les pignons des rapports et les manchons de synchronisation, afin de distribuer par des orifices calibrés des débits d'huile ajustés en fonction des composants à lubrifier en dessous. On obtient une certaine répartition de l'huile à travers les orifices donnant un débit permanent tant que les goulottes sont alimentées.

En particulier les engrenages et les cônes de frottement des synchroniseurs nécessitent une lubrification particulière pour éviter une usure, et réduire les frottements afin d'optimiser la consommation du véhicule.

Toutefois ce système de lubrification pose des problèmes. A chaud lors d'un court arrêt du véhicule les goulottes se vident sans nécessité, et après le redémarrage du véhicule il faut un petit temps pour rétablir ces débits d'huile.

A froid après un temps de décantation le problème est plus critique. L'huile froide plus visqueuse met un temps plus long à arriver alors que les surfaces en frottement étant plus asséchées, nécessitent une lubrification plus rapide.

Pour remédier à ces inconvénients une solution connue utilise une pompe électrique qui permet d'anticiper les démarrages du véhicule, et d'établir une circulation d'huile sur des éléments particuliers de la transmission afin de démarrer le véhicule dans des conditions optimum. Toutefois cette pompe électrique augmente la masse du véhicule, et ajoute des coûts importants.

La présente invention a notamment pour but d'éviter ces problèmes de l'art antérieur.

Elle propose à cet effet une transmission de véhicule automobile comprenant un manchon de synchronisation coulissant axialement sur un arbre afin d'engager de chaque côté un pignon tournant sur cet arbre pour réaliser deux rapports de vitesse, une fourchette de commande coulissant axialement pour déplacer le manchon, et une goulotte disposée au-dessus du manchon de synchronisation, présentant des orifices de distribution d'un fluide de lubrification, cette transmission est caractérisée en ce qu'elle comporte un tiroir coulissant avec le manchon, qui dans son mouvement ouvre et ferme les orifices de cette goulotte.

Un avantage de cette transmission est que le tiroir permet de manière économique, par un simple entraînement axial par le manchon de synchronisation, sans équipement électrique ajouté, de commander les orifices de la goulotte pour en particulier les fermer ou les réduire sur les éléments ne travaillant pas, et les ouvrir sur les éléments travaillant afin de distribuer le fluide aux endroits nécessaires.

On peut prévoir en particulier une fermeture complète des orifices dans une position de point mort pendant l'arrêt du véhicule, permettant de conserver dans la goulotte un volume de fluide même après un temps d'arrêt qui va se libérer automatiquement lors du démarrage de ce véhicule.

La transmission selon l'invention peut de plus comporter une ou plusieurs des caractéristiques suivantes, qui peuvent être combinées entre elles.

Avantageusement, le tiroir comporte un doigt d'entraînement engagé dans une rainure extérieure transversale du manchon de synchronisation.

Dans ce cas, avantageusement le tiroir présente une symétrie par rapport à un plan transversal passant par le doigt d'entraînement.

Avantageusement, la goulotte comporte une face inférieure présentant des bossages comprenant chacun un orifice.

Dans ce cas, avantageusement le tiroir présente une face supérieure plane venant en appui sous les bossages de la goulotte, pour fermer les orifices.

Avantageusement, dans la position centrale de point mort du manchon de synchronisation le tiroir ferme les orifices.

Avantageusement, après l'engagement d'un pignon par le manchon de synchronisation donnant un rapport de vitesse, le tiroir comporte un perçage de petit diamètre aligné sur l'orifice disposé au-dessus du pignon qui n'est pas engagé, et un perçage de grand diamètre aligné sur l'orifice disposé au-dessus du pignon qui est engagé.

Avantageusement, chaque flux de fluide venant d'un orifice ouvert, s'écoule à la fois sur un pignon et sur des cônes de frottement du manchon de synchronisation disposés du côté de ce pignon.

L'invention a aussi pour objet un véhicule automobile comportant une transmission transmettant le mouvement d'une motorisation à des roues motrices, comprenant l'une quelconque des caractéristiques précédentes.

En particulier, la motorisation peut être une machine électrique, et la transmission comporter deux rapports de vitesse.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente un arbre secondaire et une couronne de différentiel d'une transmission selon l'art antérieur comportant deux rapports, le manchon de synchronisation n'étant pas installé ;
- la figure 2 présente en vue de face les deux pignons et le manchon de synchronisation de l'arbre secondaire de cette transmission selon l'art antérieur, et en coupe axiale une goulotte d'alimentation d'huile disposée au-dessus ;
- la figure 3 présente pour une transmission selon l'invention le manchon de synchronisation et un tiroir engagé sur la rainure de ce manchon ; et
- les figures 4a, 4b et 4c présentent en vue de face le tiroir dans une position successive de point mort, de fonctionnement d'un premier rapport et de fonctionnement du deuxième rapport.

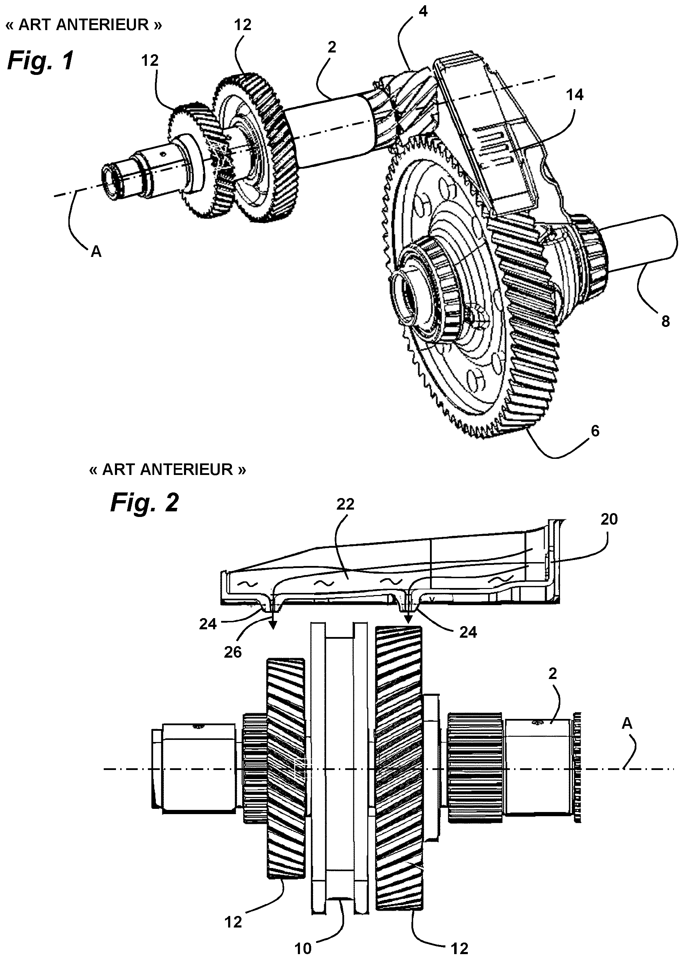

Les figures 1 et 2 présentent un arbre secondaire 2 disposé suivant un axe A, d'une transmission comportant deux rapports de vitesses pour relier une machine électrique de traction à des roues motrices du véhicule. Deux pignons menés 12 montés libres sur l'arbre secondaire 2, engrènent chacun avec un pignon menant non représenté, porté par un arbre primaire, pour réaliser les deux rapports.

Une extrémité de l'arbre secondaire 2 comporte un pignon de sortie 4, qui engrène avec une couronne de différentiel 6 entraînant de chaque côté un arbre de sortie 8 relié à une roue.

Un canal 1 représenté figure 1, est disposé dans le plan de la couronne 6, au-dessus de cette couronne avec une petite inclinaison de manière à recevoir les projections tangentielles d'huile diffusées par cette couronne lors de sa rotation pendant l'avance du véhicule.

Sous l'effet de sa vitesse de projection l'huile 22 remonte dans le canal 14, pour se déverser dans une goulotte 20 présentée figure 2, qui s'étend axialement au-dessus de l'arbre secondaire 2 en constituant une réserve d'huile 22.

La goulotte 20 forme un réservoir réalisé par un moulage d'une matière plastique, présentant à sa base deux orifices 24 disposés chacun au-dessus d'un pignon de l'arbre secondaire 12, afin de distribuer de manière régulière et permanente un flux d'huile 26 à la fois sur chaque pignon 12 pendant le roulage du véhicule, indépendamment de la position axiale du manchon de synchronisation 10.

Lors d'un arrêt du véhicule la transmission peut passer au point mort par un positionnement central du manchon de synchronisation 10, ou conserver un rapport engagé. Dans tous les cas dans les instants qui suivent l'arrêt, la goulotte 20 n'étant plus alimentée par les projections de la couronne 6 finit rapidement de se vider.

On a ensuite lors d'un démarrage prochain, après par exemple un arrêt au feu rouge, une transmission du couple par des pignons 12 relativement lubrifiés. On a aussi après un arrêt prolongé, par exemple après une nuit froide, une remise en route lente du débit d'huile qui nécessite suffisamment de projections de la couronne 6, alors qu'elles sont limitées au début à cause de la forte viscosité du fluide. Le rendement de la transmission n'est pas optimum, et les composants de la transmission peuvent être endommagés.

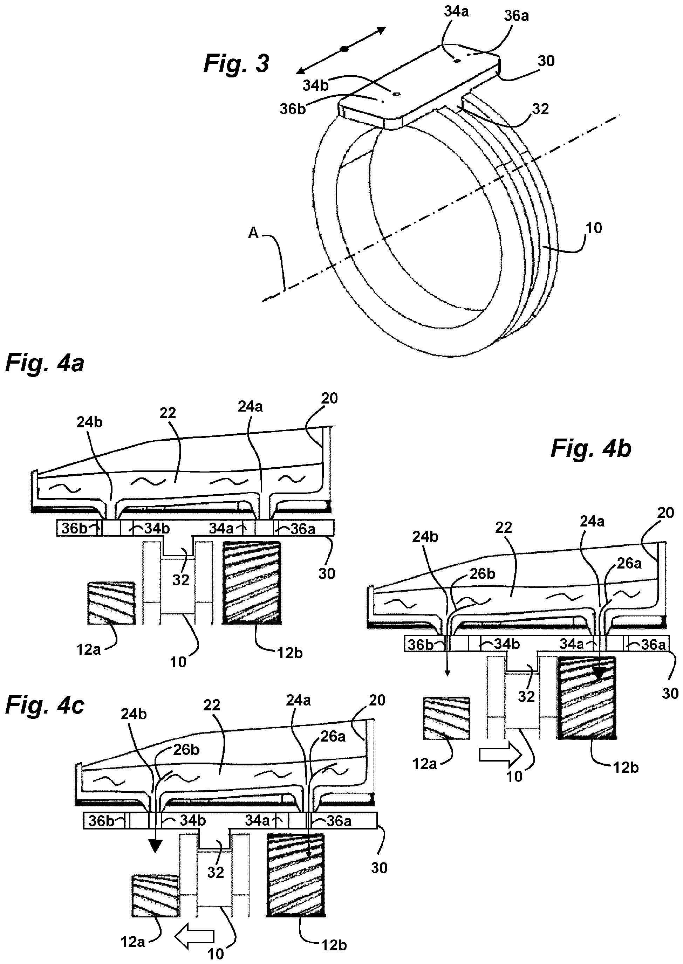

Les figures 3 et 4a présentent un tiroir 30 formant une plaque horizontale disposée au-dessus du manchon de synchronisation 10, comprenant en dessous un doigt d'entraînement 32 allongé suivant la direction transversale, qui est engagé dans la rainure extérieure de ce manchon pour coulisser axialement avec lui lors de la commande du manchon par une fourchette engagée dans cette rainure.

Le tiroir 30 présente sur le dessus une face lisse horizontale qui est plaquée sous deux bossages de la goulotte 20 dépassant un peu en dessous de sa face inférieure, comportant chacun un des orifices 24 pour la distribution d'huile.

Le tiroir 30 comporte de chaque côté d'un plan transversal de symétrie passant par le doigt d'entraînement 32, un couple de perçages comprenant en partant de ce plan un grand perçage 34a, 34b puis un petit perçage 36a, 36b.

Dans la position de point mort présentée figure 4a, chaque orifice 24a, 24b de la goulotte 20 est disposé entre le grand perçage 34a, 34b et le petit perçage 36a, 36b de son côté. On obtient avec l'appui de la base des bossages sur le tiroir 30, une fermeture des deux orifices 24a, 24b qui permet de conserver la réserve d'huile 22 présente dans la goulotte 20 lors d'une mise au point mort de la transmission pendant l'arrêt du véhicule.

Lors du passage d'un premier rapport présenté figure 4b, utilisant un premier pignon 12a disposé à droite sur la figure, le tiroir 30 coulisse en même temps que le manchon de synchronisation 10 vers ce pignon. On a en même temps par le coulissement du tiroir 30 un alignement du grand perçage droit 34a sur l'orifice de droite 24a, et un alignement du petit perçage gauche 36b sur l'orifice de gauche 24b.

Le flux d'huile droit 26a lubrifiant le pignon droit 12a qui travaille est important, le flux d'huile gauche 26b lubrifiant le pignon gauche 12b qui ne travaille pas est faible. On obtient une optimisation de la consommation totale d'huile présente dans la goulotte 20.

Le flux d'huile droit 26a important se déverse aussi entre le pignon droit 12a et le manchon de synchronisation 10 pendant le travail du synchroniseur de ce côté, ce qui contribue à sa lubrification pour éviter une détérioration pendant le travail de ses cônes de frottement lors du passage du premier rapport.

A l'inverse lors du passage du deuxième rapport présenté figure 4c, utilisant le deuxième pignon 12b disposé à gauche, le tiroir 30 coulisse avec le manchon de synchronisation 10 vers ce pignon. On obtient aussi un alignement du grand perçage gauche 34b sur l'orifice de gauche 24b, donnant de ce côté un flux d'huile gauche 26b important, et un alignement du petit perçage droit 36a sur l'orifice de droite 24a, donnant de ce côté un flux d'huile droit 26a faible.

On réalise de manière simple et automatique, avec peu de composants ajoutés dans la transmission, une optimisation de l'usage du volume d'huile 22 dans la goulotte 20, avec une absence de flux afin de garder une réserve dans la goulotte pour une transmission au point mort ne nécessitant pas de lubrification, et si le véhicule est à l'arrêt pour une goulotte qui ne se remplit plus.

On réalise aussi un débit plus faible sur le pignon 12 ou les cônes de synchronisation ne travaillant pas, ce qui permet de prévoir un flux plus important sur ceux qui travaillent. On obtient une réduction maximum des frottements ce qui améliore le rendement énergétique de la transmission.

## Revendications

1. Transmission de véhicule automobile comprenant un manchon de synchronisation (10) coulissant axialement sur un arbre (2) afin d'engager de chaque côté un pignon (12a, 12b) tournant sur cet arbre (2) pour réaliser deux rapports de vitesse, une fourchette de commande coulissant axialement pour déplacer le manchon (10), et une goulotte (20) disposée au-dessus du manchon de synchronisation (10), présentant des orifices (24a, 24b) de distribution d'un fluide de lubrification (22), **caractérisée en ce qu'**elle comporte un tiroir (30) coulissant avec le manchon (10), qui dans son mouvement ouvre et ferme les orifices (24a, 24b) de cette goulotte (20).

2. Transmission selon la revendication 1, **caractérisée en ce que** le tiroir (30) comporte un doigt d'entraînement (32) engagé dans une rainure extérieure transversale du manchon de synchronisation (10).

3. Transmission selon l'une quelconque des revendications précédentes, **caractérisée en ce que** la goulotte (20) comporte une face inférieure présentant des bossages comprenant chacun un orifice (24a, 24b).

4. Transmission selon la revendication 3, **caractérisée en ce que** le tiroir (30) présente une face supérieure plane venant en appui sous les bossages de la goulotte (20), pour fermer les orifices (24a, 24b).

5. Transmission selon l'une quelconque des revendications précédentes, **caractérisée en ce que** dans la position centrale de point mort du manchon de synchronisation (10), le tiroir (30) ferme les orifices (24a, 24b).

6. Transmission selon l'une quelconque des revendications précédentes, **caractérisée en ce qu'**après l'engagement d'un premier pignon (12a, 12b) par le manchon de synchronisation (10), le tiroir (30) comporte un premier perçage (34a, 34b) aligné sur un orifice (24a, 24b) disposé au-dessus de ce premier pignon (12a, 12b).

7. Transmission selon la revendication 6, **caractérisée en ce qu'**après l'engagement du premier pignon (12a, 12b), le tiroir (30) comporte un deuxième perçage (36a, 36b) présentant un diamètre plus petit que le premier perçage (34a, 34b), aligné sur l'orifice (24a, 24b) disposé au-dessus du deuxième pignon (12a, 12b).

8. Transmission selon l'une quelconque des revendications précédentes, **caractérisée en ce que** chaque flux de fluide (26a, 26b) venant d'un orifice ouvert (24a, 24b), s'écoule à la fois sur un pignon (12a, 12b) et sur des cônes de frottement du manchon de synchronisation (10) disposés du côté de ce pignon (12a, 12b).

9. Véhicule automobile comportant une transmission transmettant le mouvement d'une motorisation à des roues motrices, **caractérisé en ce que** cette transmission est selon l'une quelconque des revendications précédentes.

10. Véhicule automobile selon la revendication 9, **caractérisé en ce que** la motorisation est une machine électrique, et la transmission comporte deux rapports de vitesse.

## Patentansprüche

1. Kraftfahrzeuggetriebe mit einer Synchronisationshülse (10), die axial auf einer Welle (2) gleitet, um auf jeder Seite ein Ritzel (12a, 12b) in Eingriff zu bringen, das sich auf dieser Welle (2) dreht, um zwei Geschwindigkeitsverhältnisse zu erreichen, ein axiales Gleiten Steuergabel zum Bewegen der Hülse (10) und eine Rutsche (20), die über der Synchronisationshülse (10) angeordnet ist und Öffnungen (24a, 24b) zum Verteilen einer Schmierflüssigkeit (22) aufweist, die **dadurch gekennzeichnet sind, dass** sie eine Schublade (30) Gleiten mit der Hülse (10), die in ihrer Bewegung die Öffnungen (24a, 24b) dieser Rutsche (20) öffnet und schließt.

2. Getriebe nach Anspruch 1, **dadurch gekennzeichnet, dass** der Schlitten (30) einen Antriebsfinger (32) aufweist, der in eine Queraußennut der Synchronisationshülse (10) eingreift.

3. Übermittlung gemäß einem der Ansprüche oben **dadurch gekennzeichnet, dass** die Rutsche (20) eine Unterseite mit Vorsprüngen aufweist, die jeweils eine Öffnung (24a, 24b) umfassen.

4. Getriebe nach Anspruch 3, **dadurch gekennzeichnet, dass** der Schlitten (30) eine ebene Oberseite aufweist, die unter den Vorsprüngen der Rutsche (20) liegt, um die Öffnungen (24a, 24b) zu schließen.

5. Getriebe nach einem der vorhergehenden Ansprüche, **gekennzeichnet dadurch, dass** in der zentralen neutralen Position der Synchronisationshülse (10) der Schieber (30) die Öffnungen (24a, 24b) schließt.

6. Übertragung nach einem der vorhergehenden Ansprüche, **gekennzeichnet dadurch, dass** nach dem Einrücken eines ersten Ritzels (12a, 12b) hat die Spule (30) durch die Synchronisationshülse (10) eine erste Bohrung (34a, 34b), die mit einer Öffnung (24a, 24b) ausgerichtet ist, die über diesem ersten Ritzel (12a, 12b) angeordnet ist.

7. Getriebe nach Anspruch 6, **dadurch gekennzeichnet, dass** nach dem Einrücken des ersten Ritzels (12a, 12b) die Spule (30) a umfasst zweite Bohrung (36a, 36b) mit einem kleineren Durchmesser als die erste Bohrung (34a, 34b), ausgerichtet mit der Öffnung (24a, 24b), die über dem zweiten Ritzel (12a, 12b) angeordnet ist.

8. Übertragung nach einem der vorhergehenden Ansprüche, **gekennzeichnet dadurch, dass** jeder Fluidstrom (26a, 26b), der aus einer offenen Öffnung (24a, 24b) kommt, sowohl auf einem Ritzel (12a, 12b)) als auch auf den Reibkegeln fließt der Synchronisationshülse (10), die an der Seite dieses Ritzels (12a, 12b) angeordnet ist.

9. Kraftfahrzeug mit einem Getriebe, das die Bewegung einer Motorisierung auf Antriebsräder überträgt, **dadurch gekennzeichnet, dass** dieses Getriebe einem der vorhergehenden Ansprüche entspricht.

10. Kraftfahrzeug nach Anspruch 9, **dadurch gekennzeichnet, dass** die Motorisierung eine elektrische Maschine ist und das Getriebe zwei Drehzahlverhältnisse aufweist.

## Claims

1. Motor vehicle transmission comprising a synchronization sleeve (10) sliding axially on a shaft (2) in order to engage on each side a pinion (12a, 12b) rotating on this shaft (2) to achieve two speed ratios, an axially sliding control fork to move the sleeve (10), and a chute (20) disposed above the synchronization sleeve (10), having orifices (24a, 24b) for distributing a lubricating fluid (22)), **characterized in that** it comprises a drawer (30) sliding with the sleeve (10), which in its movement opens and closes the orifices (24a, 24b) of this chute (20).

2. Transmission according to claim 1, **characterized in that** the slide (30) comprises a drive finger (32) engaged in a transverse outer groove of the synchronization sleeve (10).

3. Transmission according to any one of the claims above, **characterized in that** the chute (20) has a lower face having bosses each comprising an orifice (24a, 24b).

4. Transmission according to claim 3, **characterized in that** the slide (30) has a planar upper face bearing under the bosses of the chute (20), to close the orifices (24a, 24b).

5. Transmission according to any one of the preceding claims, **characterized in that** in the central neutral position of the synchronization sleeve (10), the slide (30) closes the orifices (24a, 24b).

6. Transmission according to any one of the preceding claims, **characterized in that** after the engagement of a first pinion (12a, 12b) by the synchronization sleeve (10), the spool (30) has a first bore (34a, 34b) aligned with an orifice (24a, 24b) disposed above this first pinion (12a, 12b) .

7. Transmission according to claim 6, **characterized in that** after the engagement of the first pinion (12a, 12b), the spool (30) comprises a second bore (36a, 36b) having a smaller diameter than the first bore (34a, 34b), aligned with the orifice (24a, 24b) arranged above the second pinion (12a, 12b).

8. Transmission according to any one of the preceding claims, **characterized in that** each fluid flow (26a, 26b) coming from an open orifice (24a, 24b), flows on both a pinion (12a, 12b)) and on the friction cones of the synchronization sleeve (10) arranged on the side of this pinion (12a, 12b).

9. Motor vehicle comprising a transmission transmitting the movement of a motorization to driving wheels, **characterized in that** this transmission is according to any one of the preceding claims.

10. Motor vehicle according to claim 9, **characterized in that** the motorization is an electric machine, and the transmission has two speed ratios.
